# EUROPEAN PATENT SPECIFICATION

(11) **EP 2 995 484 B1**
(45) Date of publication and mention of the grant of the patent: **22.07.2020**
(21) Application number: 15184076.6
(22) Date of filing: 07.09.2015
(51) Int. Cl.: B60H 1/00

(54) **VEHICLE AIR-CONDITIONING APPARATUS**
FAHRZEUGKLIMAANLAGE
APPAREIL DE CLIMATISATION DE VEHICULE

(30) Priority: 09.09.2014 JP 2014183560
(43) Date of publication of application: 16.03.2016
(73) Proprietor: Valeo Japan Co., Ltd., Saitama 360-0193 (JP)
(72) Inventor: KAWANO, Katsushi, SAITAMA, 360-0193 (JP); FURUJO, Hirotaka, SAITAMA, 360-0193 (JP); SATO, Michihito, SAITAMA, 360-0193 (JP)
(74) Representative: Tran, Chi-Hai

(56) References cited:
- EP-A1- 0 258 097
- US-A1- 2010 167 635
- US-A1- 2011 174 000

## Description

### BACKGROUND

### 1. Technical Field

The present invention relates to a vehicle air-conditioning apparatus for cooling and heating and defrosting of a front glass of the vehicle.

### 2. Background Art

A vehicle air-conditioning apparatus cools air taken by an air blast unit with an evaporator to create cold air and heats the same with a heater core to create warm air, mixes the cold air and the warm air in a mixing chamber to create air-conditioning air, then blows out the air-conditioning air to a vehicle cabin to achieve comfortable cooling and warming, and also defogs a front glass, side glasses, and the like.

The cooling and warming of a vehicle cabin described above includes a ventilation mode in which air-conditioning cold air is blown out from a ventilation outlet grill toward a head portion or an upper half body of an occupant, a foot mode in which air-conditioning warm air is blown out from a foot outlet grill toward a floor in the vehicle cabin in order to warm up a foot and a lower half body of the occupant, and a defrosting mode in which the air-conditioning warm air is blown out from a defrosting air outlet grill toward the front glass for removing or preventing dew formation on the front glass and the side glasses.

In addition, in order to warm up the foot and the lower half body of the occupant while removing or preventing dew formation on the front glass, there is a defrosting and foot mode in which the air-conditioning warm air is blown out from the defrost outlet grill and the foot outlet grill and a bi-level mode in which the air-conditioning warm air is blown out from the foot outlet grill and the ventilation outlet grill. In the bi-level mode, in order to comfortably achieve cool-head warm-foot, outflow air from the ventilation outlet grill is desirably slightly lower in temperature than outflow air from the foot outlet grill (the outflow air from the foot outlet grill is desirable slightly higher in temperature than the outflow air from the ventilation outlet grill).

In order to achieve cool-head warm-foot in the bi-level mode, or in order to blow out warm air from the foot outlet grill in the foot mode, a warm air flow channel configured to heat cold air and make the heated air flow into the mixing chamber is generally provided below a cold air flow channel configured to make air flow from the evaporator into the mixing chamber.

The air-conditioning air from the mixing chamber is blown out from a defrosting air outlet port disposed on an upper portion of the mixing chamber to the defrost outlet grill, is blown out from a foot outlet port disposed on a lower portion of the mixing chamber to the foot outlet grill, and then is blown out from a ventilation outlet port disposed on the vehicle cabin side between the defrosting air outlet port and the foot outlet port to the ventilation outlet grill. A selection of respective air-conditioning modes is achieved by displacing air distribution doors disposed in the vicinity of the respective outlet ports, and a blend ratio of cold air and warm air is determined by the displacement of a mix door disposed upstream of the mixing chamber.

The vehicle air-conditioning apparatus in this configuration includes a transversely-mounted vehicle air-conditioning apparatus configured to dispose the air blast unit and the like next to the mixing chamber to flow air from the air blast unit to the mixing chamber in a vehicle width direction (lateral direction) (hereinafter, the transversely-mounted vehicle air-conditioning apparatus may be referred to simply as a vehicle air-conditioning apparatus).

For example, a transversely-mounted vehicle air-conditioning apparatus disclosed in JP-A-62-055216 includes a air blast unit (blower housing) and a temperature adjusting portion (provided with an evaporator, a heater core, and an air mix damper) configured to determine a blend ratio of cold air and warm air, both of which are disposed on the front passenger seat side, and an air distributing portion provided with a mixing chamber configured to mix the cold air and the warm air (mixing channel) and an air distribution door (ventilation damper, defrost damper) disposed at a substantially center portion in the vehicle width direction, and is configured to selectively distribute air-conditioning air to one of the ventilation outlet grill (ventilation outlet port), the defrosting air outlet grill (defrosting air outlet port), and the foot outlet grill (warm air outlet port) to operate in a desired air-conditioning mode. The transversely-mounted vehicle air-conditioning apparatus, which allows the respective portions of the air-conditioning apparatus to be arranged in parallel in the vehicle width direction, can be mounted even in a space having a small dimension in a vertical direction.

A vehicle air conditioning apparatus comprising three blow-out openings, a mixing door and a rectifying portion is disclosed in EP 0 258 097 A1.

However, even the transversely-mounted vehicle air-conditioning apparatus may be subjected to a restriction when being arranged in a space which is excessively short in the vertical direction.

For example, depending on the vehicle, a drive shaft (a shaft configured to transmit power of an engine or the like to a tire) to be disposed on a floor portion (a center portion of the floor) between a front passenger seat and a driver's seat may be set at a rather high position in the vertical direction, so that the center portion of the floor is bulged. In particular, in the case of sport-type vehicles which preferably have a low vehicle height, the center portion of the floor is formed to be bulged in many cases.

The air distributing portion of the vehicle air-conditioning apparatus to be disposed on the floor portion formed to be bulged needs to be set to have a bottom surface higher than the air blast unit and the temperature adjusting portion in order to avoid contact with the center portion of the floor. Accordingly, it is difficult to set a flowing direction of cold air cooled by the evaporator and flowing from the cold air flow channel to the mixing chamber to be the same direction as a flowing direction of warm air heated by the heater core and flowing from the warm air flow channel into the mixing chamber.

In other words, major part of the cold air flows through the mixing chamber without changing the flowing direction much, while the warm air from the warm air flow channel disposed below the cold air flow channel flows toward an upper portion of the mixing chamber, thereby flowing easily above the cold air flow. Consequently, the air-conditioning air reaching the foot outlet port tends to be lower in temperature than the air-conditioning air reaching the ventilation outlet port. In other words, during the bi-level mode, the outflow air from the foot outlet grill has a tendency of becoming slightly lower in temperature than the outflow air from the ventilation outlet grill, so that a probability that realization of cool-head warm-foot is impaired cannot be denied.

### SUMMARY

Accordingly, it is an object of the invention to realize a vehicle air-conditioning apparatus capable of realizing comfortable cool-head warm-foot air-conditioning by setting a temperature of air-conditioning air blown out from a foot outlet grill to be slightly higher than a temperature of air-conditioning air blown out from a ventilation outlet grill even in the case where a bottom surface of an air distributing portion is higher than a bottom surface of a temperature adjusting portion.

In order to solve the above-described object, a vehicle air-conditioning apparatus of the invention includes: a case, the case at least including: a cold air flow channel in which cold air flows; a warm air flow channel in which warm air flows; a mixing chamber configured to mix the cold air and the warm air to create air-conditioning air; a cold air opening that opens between the cold air flow channel and the mixing chamber; a warm air opening that opens between the warm air flow channel and the mixing chamber; a first opening and a second opening that open the mixing chamber; and a third opening configured to blow out the air-conditioning air from a position lower than the first opening and the second opening.

In order to adjust the temperature of the air-conditioning air, the vehicle air-conditioning apparatus includes a mix door configured to adjust a ratio between an amount of the cold air flowing from the cold air opening into the mixing chamber and an amount of the warm air flowing from the warm air opening into the mixing chamber, and an air distribution door disposed in the mixing chamber or downstream thereof for making a desired amount of the air-conditioning air flow to a desired position in a vehicle cabin.

In addition, the vehicle air-conditioning apparatus includes a rectifying portion disposed in the vicinity of an upstream end of the mixing chamber for increasing an amount of the warm air flowed from the warm air opening into the mixing chamber and reaching the third opening disposed at a position lower than the first opening and the second opening. In other words, the vehicle air-conditioning apparatus is capable of increasing the temperature of the air-conditioning air flowing through the third opening to a level higher than the temperature of the air-conditioning air flowing through other openings (for example, second opening) by increasing an amount of flow of the warm air flowing through the third opening (Claim 1) .

The first opening may be a defrost opening, the second opening may be a ventilation opening, and the third opening may be a foot opening. Accordingly, the vehicle air-conditioning apparatus is capable of realizing comfortable cool-head warm-foot air-conditioning by increasing the temperature of the air-conditioning air flowing through the foot opening to a level higher than the temperature of the air-conditioning air flowing through the ventilation opening (Claim 9).

The rectifying portion may rectify the cold air flowing from the cold air opening to the mixing chamber toward one or both of the first opening and the second opening (Claim 2). Accordingly, the vehicle air-conditioning apparatus is capable of increasing the amount of flow of the warm air flowing through the third opening and, in addition, reducing the amount of flow of the cold air flowing through the third opening, so that the cool-head warm-foot air-conditioning can be realized further comfortably by increasing the temperature of the air-conditioning air flowing through the third opening to a level higher than the temperature of the air-conditioning air flowing through other openings.

The vehicle air-conditioning apparatus is configured in such a manner that a height of the mixing chamber may be set to be lower than a total height of the cold air flow channel and the warm air flow channel by intersecting a flowing direction of the cold air flowing from a downstream end of the cold air flow channel toward the cold air opening with a flowing direction of the warm air flowing from a downstream end of the warm air flow channel toward the warm air opening. Since the rectifying portion is capable of making the warm air flowing into the mixing chamber flow to the third opening, the vehicle air-conditioning apparatus is capable of realizing comfortable cool-head warm-foot air-conditioning by increasing the temperature of the air-conditioning air flowing through the third opening to a level higher than the temperature of the air-conditioning air flowing through other openings (Claim 3).

The flowing direction of the air-conditioning air in the mixing chamber here may be the substantially same direction as the flowing direction of the cold air having passed from the cold air flow channel through the cold air opening and flowing toward an upstream end of the mixing chamber, or may be the substantially same direction as the flowing direction of the warm air having passed from the warm air flow channel through the warm air opening and flowing toward a position in the vicinity of the upstream end of the mixing chamber (Claim 4) .

For example, in the case where the warm air opening is disposed below the mixing chamber in the vicinity of the upstream end of the mixing chamber and the warm air flow channel communicates with the mixing chamber (Claim 5), the warm air having passed from the warm air flow channel through the warm air opening and flowing toward the upstream end of the mixing chamber flows upward from below the mixing chamber so as to intersect the cold air flowing into the mixing chamber, and then is rectified so as to flow toward the third opening by the rectifying portion and flows mainly below the cold air flowing into the mixing chamber (the cold air flows mainly through an upper portion in the mixing chamber, and the warm air flows mainly through a lower portion in the mixing chamber) .

Alternatively, even in the case where the cold air opening is disposed above the mixing chamber in the vicinity of the upstream end of the mixing chamber and the cold air flow channel communicates with the mixing chamber (Claim 5), the warm air having passed from the warm air flow channel through the warm air opening and flowing toward the upstream end of the mixing chamber flows toward the mixing chamber so as to intersect the cold air flowing into the mixing chamber, and then is rectified so as to flow toward the third opening by the rectifying portion and flows mainly below the cold air flowing into the mixing chamber.

The first opening (defrost opening), the second opening (ventilation opening), and the third opening (foot opening) may be opened toward the mixing chamber so as to intersect the flowing direction of the air-conditioning air in the mixing chamber (Claim 6). For example, the ventilation opening may be opened toward an occupant located in a rear of the vehicle with respect to the air-conditioning apparatus so as to intersect or flow substantially orthogonally to the flowing direction (vehicle width direction) of the air-conditioning air in the mixing chamber.

The rectifying portion according to the invention has a rectifying surface having a width over the entire area of the mixing chamber in the width direction (a direction intersecting the flowing direction of the air-conditioning air in the mixing chamber) or over partial area of the mixing chamber in the with direction so as to rectify the warm air flowing from the warm air opening into the mixing chamber flows to the third opening (Claim 1). The rectifying portion having the configuration as described above is capable of optimizing the rectifying direction of the warm air flowing into the mixing chamber toward the third opening (foot opening) depending on positions of the third opening (foot opening) in the mixing chamber.

The length of the rectifying surface of the rectifying portion is different depending on portions in the width direction (Claim 1). The rectifying portion having the configuration as described above is capable of optimizing the rectifying direction of the warm air flowing into the mixing chamber toward the third opening (foot opening) depending on a distance between the upstream end of the mixing chamber and the third opening (foot opening) and the positional relationship therebetween.

The rectifying surface of the rectifying portion may include one or both of a flat surface and a curved surface (Claim 7). The rectifying portion having a configuration as described above is capable of further optimizing the rectifying direction of the warm air flowing into the mixing chamber toward the third opening (foot opening).

The vehicle air-conditioning apparatus may further include a cooling device disposed in the cold air flow channel and a heating device disposed in the warm air flow channel (Claim 8).

### Advantageous Effects of Invention

The vehicle air-conditioning apparatus of the invention having the configuration described above is capable of realizing comfortable cool-head warm-foot air-conditioning by setting a temperature of air-conditioning air flowing through the foot outlet port and blown out from the foot outlet grill to be slightly higher than a temperature of air-conditioning air flowing through the ventilation outlet port and blown out from the ventilation outlet grill.

### BRIEF DESCRIPTION OF DRAWINGS

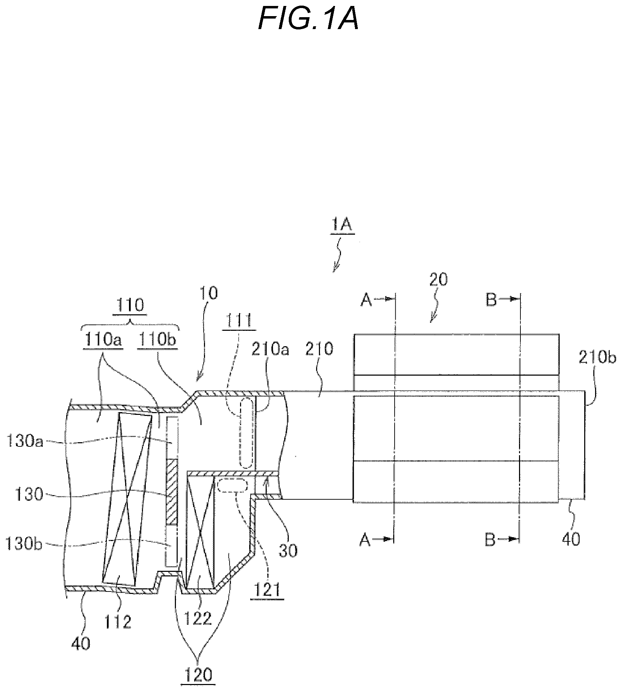

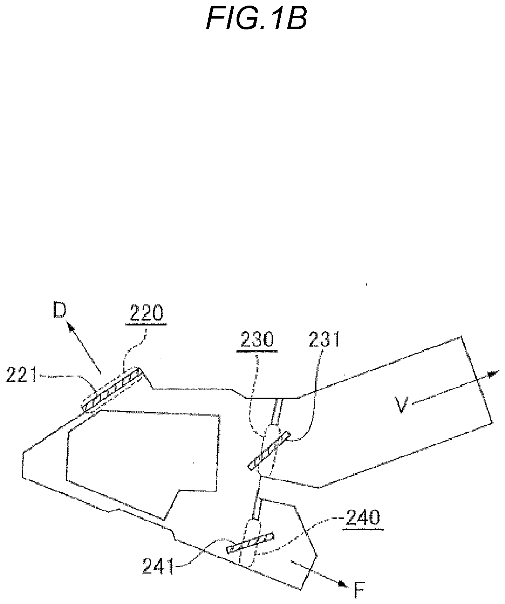

Fig. 1A is a schematic cross-sectional view of a vehicle air-conditioning apparatus according to an embodiment of the invention illustrating a temperature adjusting portion. Fig. 1B is a schematic cross-sectional view of an air distributing portion (a schematic cross-sectional view taken along the line A-A in Fig. 1A).

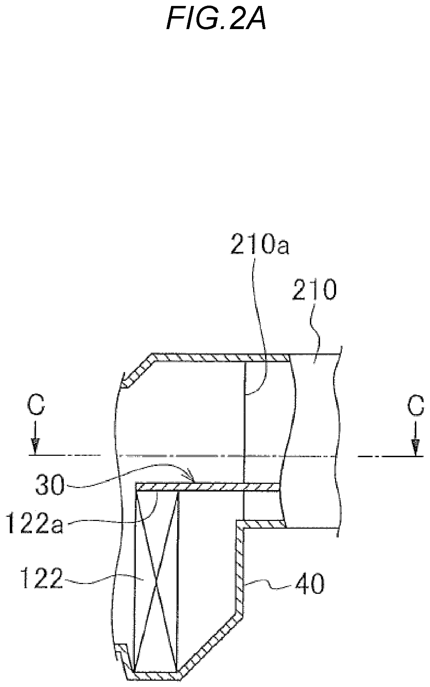

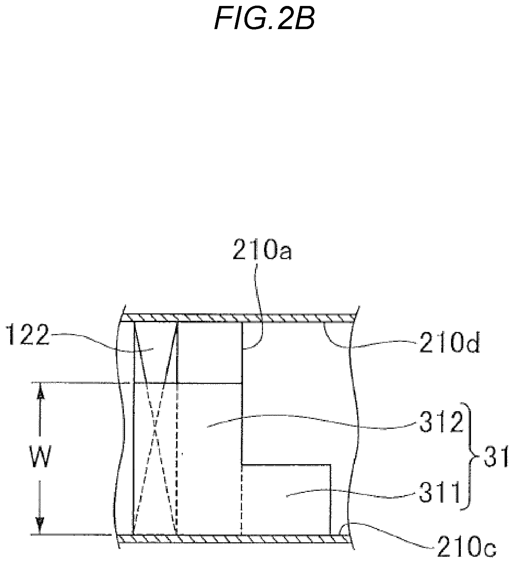

Fig. 2A is a schematic cross-sectional side view of a portion in the vicinity of a boundary area between the temperature adjusting portion and the air distributing portion of the vehicle air-conditioning apparatus illustrated in Figs. 1A and 1B. Fig. 2B is a schematic cross-sectional plan view of the portion in the vicinity of the boundary area between the temperature adjusting portion and the air distributing portion illustrated in Figs. 1A and 1B (a schematic cross-sectional view taken along the line C-C in Fig. 2A).

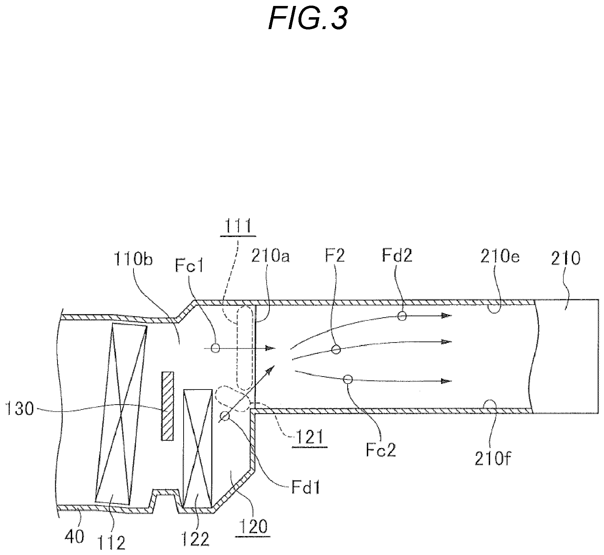

Fig. 3 is a drawing illustrating, as a comparative example, flows of a cold air flow and a warm air flow in a mixing chamber in the case where it is assumed that a rectifying portion is not provided in the vehicle air-conditioning apparatus illustrated in Figs. 1A and 1B.

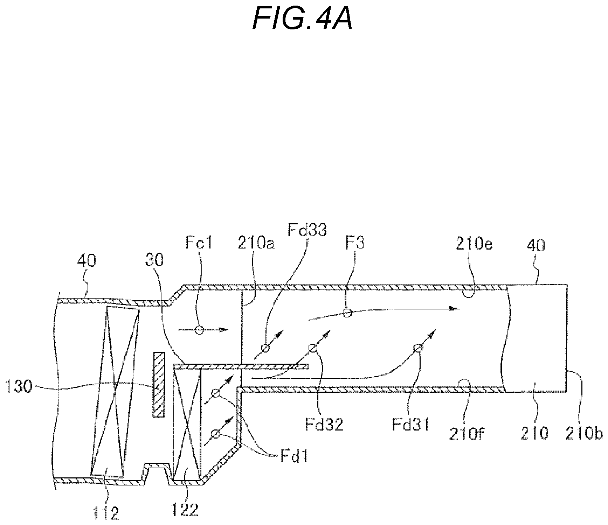

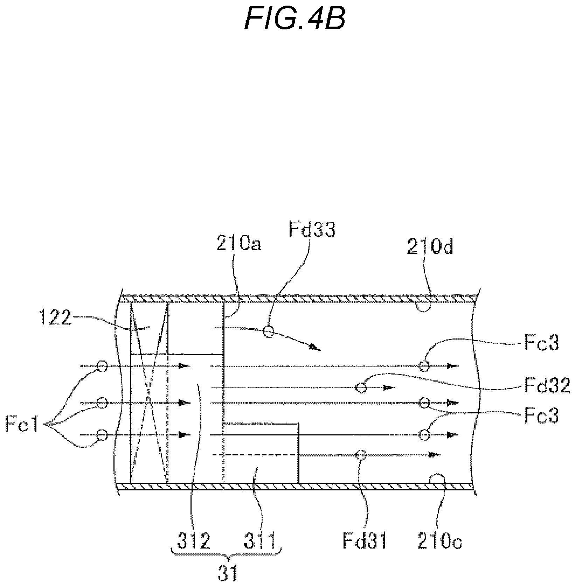

Fig. 4A illustrates flows of the cold air flow and the warm air flow in the mixing chamber in the vehicle air-conditioning apparatus in Figs. 1A and 1B together with a structure of schematic cross-sectional side view, Fig. 4B illustrates flows of the cold air flow and the warm air flow in the mixing chamber at a portion in the vicinity of the boundary between the temperature adjusting portion and the air distributing portion together with a structure of schematic cross-sectional plan view.

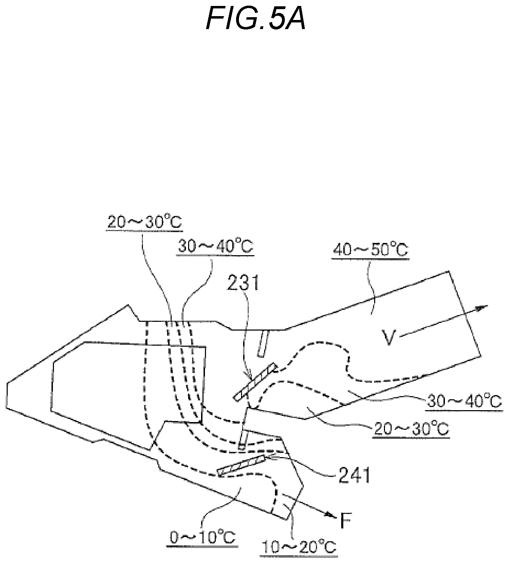

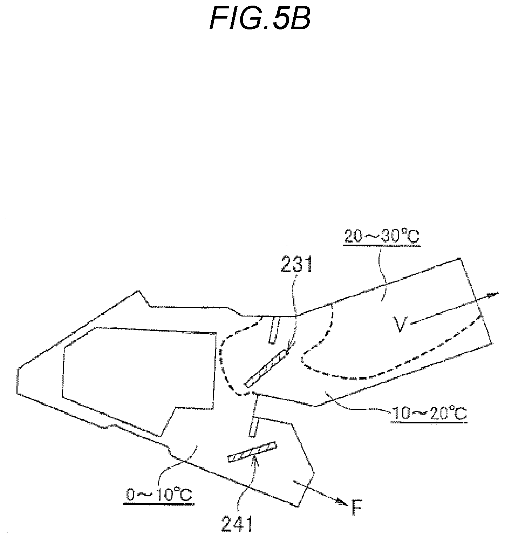

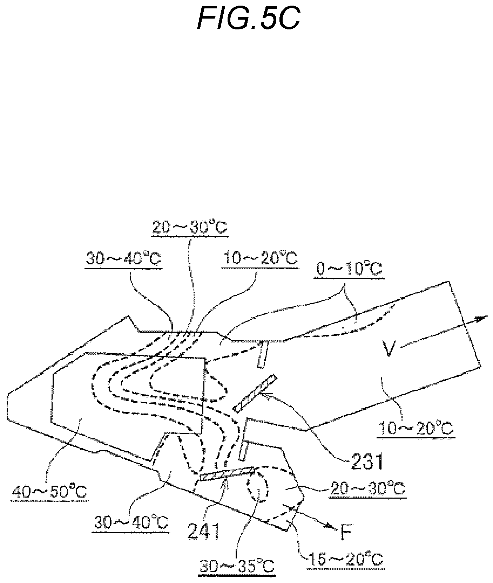

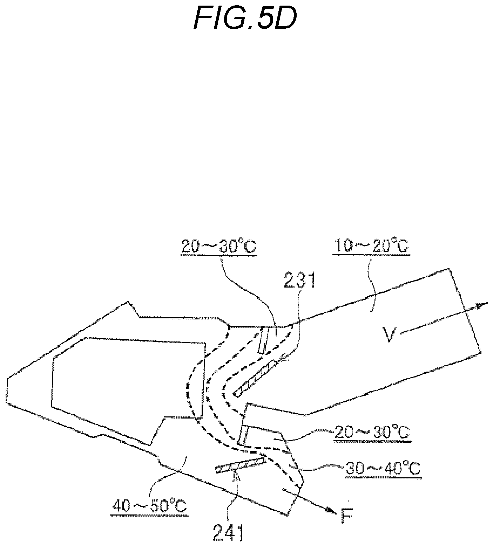

Fig. 5A is a drawing illustrating a result of simulation of a temperature distribution of air-conditioning air flowing through a ventilation opening in the vehicle air-conditioning apparatus illustrated in Figs. 1A and 1B and air-conditioning air flowing through a foot opening conducted at a portion biased to an upstream end of the mixing chamber when it is assumed that the rectifying portion is not provided. Fig. 5B is a drawing illustrating a simulation result at a portion biased to a downstream end of the mixing chamber when it is assumed that the rectifying portion is not provided. Fig. 5C is a drawing illustrating a simulation result at a portion biased to the upstream end of the mixing chamber in the case where the rectifying portion is provided. Fig. 5D is a drawing illustrating a simulation result at a portion biased to the downstream end of the mixing chamber in the case where the rectifying portion is provided.

### DETAIL DESCRIPTION OF INVENTION

Referring now to the drawings, a vehicle air-conditioning apparatus according to an embodiment of the invention will be described.

A vehicle air-conditioning apparatus 1A illustrated in Fig. 1A includes a temperature adjusting portion 10 configured to cool and heat air blasted from an air blast unit (not illustrated), an air distributing portion 20 configured to mix cold air and warm air supplied from the temperature adjusting portion 10 and blow out the same to a desired position in a vehicle cabin, and a rectifying portion 30 configured to rectify at least the warm air supplied from the temperature adjusting portion 10 to the air distributing portion 20. The air blast unit, the temperature adjusting portion 10, and the air distributing portion 20 are arranged in this order along a left-and-right direction of a vehicle on which the vehicle air-conditioning apparatus 1A described above is mounted. The vehicle air-conditioning apparatus 1A is referred to as a transversely-mounted air-conditioning apparatus, or a horizontally-mounted air-conditioning apparatus. Since the air blast unit, the temperature adjusting portion 10, and the air distributing portion 20 are arranged in a lateral direction (horizontal direction), suitable arrangement is achieved even though a dimension in a vertical direction is shorter compared to a vehicle air-conditioning apparatus (vertically-mounted air-conditioning apparatus) in which the air blast unit and the temperature adjusting portion are arranged in the vertical direction in a stacked manner.

In the vehicle air-conditioning apparatus 1A, the rectifying portion 30 is disposed from the temperature adjusting portion 10 to the air distributing portion 20, and the respective components, namely, the temperature adjusting portion 10, the air distributing portion 20, and the rectifying portion 30 are stored in or coupled to a case 40. The case 40 is formed by injection molding a resin (for example, polypropylene, polyethylene, and the like). The rectifying portion 30 may be integrally injection molded with the case 40 or arranged inside the case 40 after having been molded as a separate member. In the case where the rectifying portion 30 is molded as a separate member, it may be formed of the same resin as the case 40, or may be a metal (for example, aluminum, stainless, iron, and the like).

The temperature adjusting portion 10 includes at least, a cold air flow channel 110 (the cold air flow channel 110 includes an upstream side cold air flow channel 110a and a downstream side cold air flow channel 110b), a cold air opening 111 disposed at a downstream end of the downstream side cold air flow channel 110b, an evaporator 112, a warm air flow channel 120, a warm air opening 121 disposed at a downstream end of the warm air flow channel 120, a heater core 122, and a mix door 130 (the evaporator 112 disposed in the upstream side cold air flow channel 110a is capable of cooling air flowing therethrough and creating cold air, and the heater core 122 disposed in the vicinity of an upstream end portion of the warm air flow channel 120 is capable of heating air flowing therethrough and creating warm air).

In the vehicle air-conditioning apparatus 1A, the upstream side cold air flow channel 110a communicates with the downstream side cold air flow channel 110b and the warm air flow channel 120 disposed below the downstream side cold air flow channel 110b, so that the cold air from the upstream side cold air flow channel 110a can flow into the downstream side cold air flow channel 110b and the warm air flow channel 120.

The mix door 130 is slidably disposed between the upstream side cold air flow channel 110a and the downstream side cold air flow channel 110b and the warm air flow channel 120, and is capable of being displaced between a first position 130a which prevents a flow from the upstream side cold air flow channel 110a to the downstream side cold air flow channel 110b (which closes the downstream side cold air flow channel 110b) and, on the other hand, maximizes a flow from the upstream side cold air flow channel 110a to the warm air flow channel 120 (opens the warm air flow channel 120) and a second position 130b which maximizes a flow from the upstream side cold air flow channel 110a to the downstream side cold air flow channel 110b and, on the other hand, prevents a flow from the upstream side cold air flow channel 110a to the warm air flow channel 120 continuously. The cold air flowing through the downstream side cold air flow channel 110b flows from the cold air opening 111 into the air distributing portion 20, and the cold air flowing through the warm air flow channel 120 becomes warm air and flows from the warm air opening 121 into the air distributing portion 20.

In the vehicle air-conditioning apparatus 1A configured as described above, a dimension of the temperature adjusting portion 10 in a height direction is determined by dimensions of the downstream side cold air flow channel 110b and the warm air flow channel 120 disposed therebelow in the height direction, and a dimension of the air distributing portion 20 in the height direction is determined by a dimension of a mixing chamber 210 provided in the air distributing portion 20 in the height direction. Therefore, the air distributing portion 20 may be configured so that a bottom surface of the air distributing portion 20 is higher than a bottom surface of the temperature adjusting portion 10 as illustrated in Fig. 1A by being set to have a dimension smaller than the temperature adjusting portion in the height direction. Therefore, the vehicle air-conditioning apparatus 1A may be mounted on a vehicle in which a drive shaft or the like (not illustrated) is disposed below the air distributing portion 20, which may contribute to realization of vehicles having a low vehicle height.

By sliding the mix door 130, an amount of flow of the cold air flowing from the downstream side cold air flow channel 110b through the cold air opening 111 to the mixing chamber 210 and an amount of the warm air flowing from the warm air flow channel 120 through the warm air opening 121 to the mixing chamber 210 are adjusted respectively (the blend ratio of the cold air and the warm air is adjusted), whereby the temperature of the air-conditioning air may be set as needed.

For example, in the case where the mix door 130 is slid to a position substantially intermediate between the first position 130a and the second position 130b as illustrated in Fig. 1A, the cold air from the upstream side cold air flow channel 110a flows by the substantially same amount into the downstream side cold air flow channel 110b and the warm air flow channel 120, whereby the substantially same amount of cold air and warm air flow into the mixing chamber 210.

In the case where the mix door 130 is slid to the first position 130a, the substantially entire cold air from the upstream side cold air flow channel 110a flows through the warm air flow channel 120, is heated by the heater core 122, and flows into the mixing chamber 210. In the case where the mix door 130 is slid to the second position 130b, the substantially entire cold air from the upstream side cold air flow channel 110a flows through the downstream side cold air flow channel 110b, and flows into the mixing chamber 210 in a state of the cold air.

The mix door provided in the vehicle air-conditioning apparatus 1A is not limited to a configuration described above as long as the mixture of the cold air and the warm air in the mixing chamber is determined. For example, the mix door may be a known cantilevered door, a butterfly-type door, a rotary door, and a film door.

The air distributing portion 20 includes at least the mixing chamber 210, a defrost opening 220, a defrost air distributing door 221 disposed in the vicinity of the defrost opening 220, a ventilation opening 230, a ventilation air distributing door 231 disposed in the vicinity of the ventilation opening 230, a foot opening 240, and a foot air distributing door 241 disposed in the vicinity of the foot opening 240 (Figs. 1A and 1B).

The mixing chamber 210 has a longitudinal direction in the flowing direction of the air-conditioning air (the vehicle width direction), and a width direction in a direction orthogonal to the flowing direction of the air-conditioning air (vehicle fore-and-aft direction). In the vehicle air-conditioning apparatus 1A, the defrost opening 220 has an opening substantially parallel to the longitudinal direction of the mixing chamber 210 and opens upward in a direction of travel of the vehicle (an arrow D in Fig. 1B). The ventilation opening 230 has an opening substantially parallel to the longitudinal direction of the mixing chamber 210 and opens upward in a direction of the vehicle cabin (an arrow V in Fig. 1B). The foot opening 240 has an opening substantially parallel to the longitudinal direction of the mixing chamber 210 and opens substantially toward a floor of the vehicle cabin (an arrow F in Fig. 1B).

The defrost air distributing door 221 disposed in the vicinity of the defrost opening 220 restricts an aperture ratio of the defrost opening 220 to set an amount of the air-conditioning air flowing from the mixing chamber 210 through the defrost opening 220 and blown out from a defrost outlet grill (not illustrated) to a desired amount (in Fig. 1B, the defrost air distributing door 221 closes the defrost opening 220).

The ventilation air distributing door 231 disposed in the vicinity of the ventilation opening 230 restricts the aperture ratio of the ventilation opening 230 to set an amount of the air-conditioning air blown out from a ventilation outlet grill (not illustrated) to a desired amount. The foot air distributing door 241 disposed in the vicinity of the foot opening 240 restricts the aperture ratio of the foot opening 240 to set an amount of the air-conditioning air blown out from a foot outlet grill (not illustrated) to a desired amount.

The air distributing door (the defrost air distributing door or the like) provided in the vehicle air-conditioning apparatus 1A is not limited to the configuration described above as long as the flow of the air-conditioning air in the respective openings (defrost opening and the like) is regulated.

A schematic configuration of the rectifying portion disposed in the vicinity of a boundary area between the temperature adjusting portion 10 and the air distributing portion 20 will be described. Fig. 2A is a schematic cross-sectional side view illustrating structure of a portion in the vicinity of the area, and Fig. 2B is a schematic cross-sectional plan view illustrating a structure of the portion in the vicinity of the area.

The rectifying portion 30 is disposed in the vicinity of an upstream end 210a of the mixing chamber 210, and a rectifying surface (rectifying plate) 31 provided on the rectifying portion 30 includes a first rectifying surface (rectifying plate) 311 and a second rectifying surface (rectifying plate) 312. In the vehicle air-conditioning apparatus 1A, the first rectifying surface 311 and the second rectifying surface 312 are integrally located on the substantially same plane. The rectifying surface 31 extends from an upper end 122a of the heater core 122 toward the mixing chamber 210, and the width of the rectifying surface 31 (dimension in the vehicle fore-and-aft direction) is, for example, about 70 to 80% the width of the upstream end 210a of the mixing chamber 210.

The first rectifying surface 311 is disposed on a first side wall 210c (side wall on the vehicle cabin side) side of the mixing chamber 210 (for example, is in substantially contact with the first side wall 210c), and extends from the upper end 122a of the heater core 122 via the area in the vicinity of the upstream end 210a of the mixing chamber 210 to an interior of the mixing chamber 210.

The second rectifying surface 312 is disposed at a position biased to a second side wall 210d (side wall on the side in the direction of travel) of the mixing chamber 210 with respect to the first rectifying surface 311, and extends from the upper end 122a of the heater core 122 to an area in the vicinity of the upstream end 210a of the mixing chamber 210. In other words, the second rectifying surface 312 is apart from the second side wall 210d of the mixing chamber 210, and is shorter than the first rectifying surface 311.

### Flow of Cold Air and Warm Air in Mixing Chamber in the case where Rectifying Portion is not provided

An incoming cold air flow Fc1 flowing from the downstream side cold air flow channel 110b via the cold air opening 111 and the upstream end 210a of the mixing chamber 210 into the mixing chamber 210 can be flowed into the mixing chamber 210 without changing the flowing direction much. In contrast, an incoming warm air flow Fd1 flowing from the warm air flow channel 120 via the warm air opening 121 and the upstream end 210a of the mixing chamber 210 into the mixing chamber 210 flows from obliquely below the upstream end 210a of the mixing chamber 210 into the mixing chamber 210, and then is directed toward an upper side wall portion 210e of the mixing chamber 210.

Therefore, if it is assumed that the vehicle air-conditioning apparatus 1A does not have the rectifying portion 30 as illustrated in Fig. 3, the incoming warm air flow Fd1 and the incoming cold air flow Fc1 intersect in the vicinity of the upstream end 210a of the mixing chamber 210. Part of the incoming warm air flow Fd1 and the incoming cold air flow Fc1 intersecting each other are mixed together with each other, becomes a mixed air flow F2, and flows in a direction determined from the flowing direction, the flowing speed, and the amount of flow of the incoming warm air flow Fd1 and the incoming cold air flow Fc1.

The incoming warm air flow Fd1 which has not been mixed much with the incoming cold air flow Fc1 becomes a warm air flow Fd2, which is slightly decreased in temperature to a level lower than the incoming warm air flow Fd1 and flows toward the upper side wall portion 210e of the mixing chamber 210, and then flows in the vicinity of the upper side wall portion 210e (flows above the mixed air flow F2). The incoming cold air flow Fc1 which has not been mixed much with the incoming warm air flow Fd1 becomes a cold air flow Fc2 which has a temperature slightly higher than the incoming cold air flow Fc1, and flows through a portion in the vicinity of a lower side wall portion 210f of the mixing chamber 210 (the lower side of the warm air flow Fd2 and the mixed air flow F2). In other words, the mixed air flow F2 flows through the center of the mixing chamber 210 (between the cold air flow Fc2 and the warm air flow Fd2).

In the vehicle air-conditioning apparatus 1A having the rectifying portion 30, in the vicinity of the upstream end 210a of the mixing chamber 210, the rectifying surface 31 of the rectifying portion 30 rectifies a flowing direction of the incoming warm air flow Fd1 as illustrated in Figs. 4A and 4B.

Specifically, the first rectifying surface 311 provided on the rectifying surface 31 rectifies the incoming warm air flow Fd1 flowing to the first side wall 210c side of the mixing chamber 210 to a first warm air flow Fd31. The second rectifying surface 312 provided on the rectifying surface 31 rectifies the incoming warm air flow Fd1 flowing to the side biased to the second side wall 210d of the mixing chamber 210 with respect to the first rectifying surface 311 to a second warm air flow Fd32. However, the incoming warm air flow Fd1 becomes a third warm air flow Fd33 without being rectified between the second rectifying surface 312 and the second side wall 210d of the mixing chamber 210 because the rectifying surface is not provided.

With the first rectifying surface 311 increased in length, the first warm air flow Fd31 is capable of flowing further in the vicinity of the lower side wall portion 210f of the mixing chamber 210, for example, to an area in the vicinity of an intermediate area between the upstream end 210a and a downstream end 210b of the mixing chamber 210 (and furthermore to an area in the vicinity of the downstream end 210b). In addition, with the second rectifying surface 312 having a length set as needed, the second warm air flow Fd32 is capable of flowing further in the vicinity of the lower side wall portion 210f of the mixing chamber 210, for example, to an area further from the upstream end 210a of the mixing chamber 210.

The third warm air flow Fd33 which has not been rectified by the rectifying portion 30 flows in the vicinity of the upstream end 210a of the mixing chamber 210 to the upper side wall portion 210e. In the vicinity of the rectifying portion 30 at this time, the first and second warm air flows Fd31 and 32 rectified by the rectifying surface 31 flow little to the upper side wall portion 210e of the mixing chamber 210, and hence the third warm air flow Fd33 makes an attempt to flow to the first side wall 210c side of the mixing chamber 210 as well. The third warm air flow Fd33 that has acquired two flowing directions in this manner is mixed with the incoming cold air flow Fc1 flowing into the mixing chamber 210 and becomes a mixed air flow F3. Consequently, the mixed air flow F3 flows through the substantially center and an upper portion of the mixing chamber 210 toward the downstream end 210b while slightly circling.

In other words, the mixed air flow F3 flows through the substantially center and the upper portion of the mixing chamber 210 while slightly circling, and the first warm air flow Fd31 flows in the vicinity of the lower side wall portion 210f of the mixing chamber 210 (below the mixed air flow F3) to, for example, an area in the vicinity of the intermediate area between the upstream end 210a and the downstream end 210b of the mixing chamber 210, and the second warm air flow Fd32 flows to an area apart from the upstream end 210a of the mixing chamber 210 in the vicinity of the lower side wall portion 210f of the mixing chamber 210 (below the mixed air flow F3).

In this manner, the vehicle air-conditioning apparatus 1A is capable of rectifying the incoming warm air flow Fd1 to create the first warm air flow Fd31, the second warm air flow Fd32, and the third warm air flow Fd33, and then making the mixed air flow F3, which is a mixture of the incoming cold air flow Fc1 and the third warm air flow Fd33 flow in a substantially entire area of the mixing chamber 210. As a result of mixture of the mixed air flow F3 with the first warm air flow Fd31 and the second warm air flow Fd32 while slightly circling, the vehicle air-conditioning apparatus 1A is capable of mixing the cold air flow and the warm air flow further uniformly in the substantially entire area of the mixing chamber 210.

Effects of the rectifying portion 30 in the vehicle air-conditioning apparatus 1A will be described while comparing a result of simulation in the case where the rectifying portion 30 is not provided and a result of simulation in the case where the rectifying portion 30 is provided in the case where the vehicle air-conditioning apparatus 1A is operated in a bi-level mode.

The air-conditioning air in the operation in the bi-level mode is a mixture of the incoming cold air flow Fc1 and the incoming warm air flow Fd1 flowing into the mixing chamber 210, and the air distributing portion 20 closes the defrost air distributing door 221 as illustrated in Fig. 1B, while the air distributing portion opens the ventilation air distributing door 231 and the foot air distributing door 241 adequately to distribute a desired amount of the air-conditioning air to the ventilation opening 230 and the foot opening 240.

Figs. 5A and 5B illustrate a result of simulation in the case where the vehicle air-conditioning apparatus 1A is not provided with the rectifying portion 30. Here, Fig. 5A illustrates a cross section (cross section taken along the line A-A in Fig. 1A) at a portion biased to the upstream end 210a of the mixing chamber 210, and Fig. 5B illustrates a cross section (cross section taken along the line B-B in Fig. 1B) at a portion biased to the downstream end 210b of the mixing chamber 210. In Figs. 5A and 5B, illustration of the defrost air distributing door 221 in a closed state and the defrost opening 220 is omitted.

In the case where the vehicle air-conditioning apparatus 1A is not provided with the rectifying portion 30, as described above, the warm air flow Fd2 flows on the upper side wall portion 210e side of the mixing chamber 210, the cold air flow Fc2 flows on the lower wall portion 210f side of the mixing chamber 210, and the mixed air flow F2 flows between the incoming cold air flow Fc1 and the incoming warm air flow Fd1.

In this manner, the warm air flow Fd2 flows on the upper side wall portion 210e side of the mixing chamber 210. However, since the ventilation air distributing door 231 is opened in an upper portion in the direction of the vehicle cabin, the warm air flow Fd2 flows to the ventilation opening 230. The warm air flow Fd2 which reaches the ventilation opening 230 reaches more on the upstream side of the ventilation opening 230 (a portion biased to the upstream end 210a of the mixing chamber 210) than on the downstream side of the ventilation opening 230 (a portion biased to the downstream end 210b of the mixing chamber 210).

In this manner, the warm air flow Fd2 which changes the flowing direction to the ventilation opening 230 flows through the ventilation opening 230 while pushing the mixed air flow F2 to the foot opening 240 side, and the mixed air flow F2 pushed to the foot opening 240 side pushes the cold air flow Fc2 further to the second side wall 210d side of the mixing chamber 210 (the side wall on the side of the direction of travel).

In contrast, since the amount of the warm air flow Fd2 which changes the flowing direction to the ventilation opening 230 at the portion biased to the downstream end 210b of the mixing chamber 210 is reduced, the amounts of the mixed air flow F2 pushed to the foot opening 240 side and the cold air flow Fc2 pushed to the second side wall 210d side of the mixing chamber 210 (the side wall on the side of the direction of travel) are reduced.

Therefore, in the portion biased to the upstream end 210a of the mixing chamber 210, a large part of the warm air flow Fd2 is blown out from the ventilation opening 230, and a large part of the mixed air flow F2 (including the incoming cold air flow Fc1) and part of the cold air flow Fc2 are blown out from the foot opening 240. Consequently, as illustrated in Fig. 5A, the air-conditioning air blown out from the ventilation opening 230 has a temperature of 40 to 50°C, and the air-conditioning air blown out from the foot opening 240 has a temperature of 10 to 20°C at the portion biased to the upstream end 210a of the mixing chamber 210 .

In contrast, since little part of the warm air flow Fd2 reaches the portion biased to the downstream end 210b of the mixing chamber 210, the mixed air flow F2 flows on the upper side wall portion 210e side of the mixing chamber 210 instead of the warm air flow Fd2, and the cold air flow Fc2 flows on the lower side wall portion 210f side of the mixing chamber 210 (below the mixed air flow F2). Therefore, major part of the air-conditioning air blown out from the ventilation opening 230 becomes the mixed air flow F2, and major part of the air-conditioning air blown out from the foot opening 240 becomes the cold air flow Fc2. Consequently, as illustrated in Fig. 5B, the air-conditioning air blown out from the ventilation opening 230 has a temperature of 20 to 30°C, and the air-conditioning air blown out from the foot opening 240 has a temperature of 0 to 10°C.

In other words, in the case where the vehicle air-conditioning apparatus 1A is not provided with the rectifying portion 30, the air-conditioning air blown out from the foot outlet grill is reduced in temperature lower than the air-conditioning air blown out from the ventilation outlet grill. Therefore, the cool-head warm-foot is not achieved, and the air-conditioning air blown out from the ventilation outlet grill and the foot outlet grill has a high temperature on the upstream end 210a side of the mixing chamber 210, and a low temperature on the downstream end 210b side of the mixing chamber 210 (a difference is generated between air-conditioning on the driver's seat side and air-conditioning on the front passenger seat side).

Figs. 5C and 5D illustrate a result of simulation in the case where the vehicle air-conditioning apparatus 1A is provided with the rectifying portion 30. Here, Fig. 5C illustrates a cross section of the portion biased to the upstream end 210a of the mixing chamber 210 in the same manner as Fig. 5A, and Fig. 5D illustrates a cross section at the portion biased to the downstream end 210b of the mixing chamber 210 in the same manner as Fig. 5B.

As described above, the mixed air flow F3 flows through the substantially center and the upper portion of the mixing chamber 210 while slightly circling, and the first warm air flow Fd31 flows to, for example, the area in the vicinity of the intermediate area between the upstream end 210a and the downstream end 210b of the mixing chamber 210 in the vicinity of the lower side wall portion 210f of the mixing chamber 210 (below the mixed air flow F3), and the second warm air flow Fd32 flows to the area apart from the upstream end 210a of the mixing chamber 210 in the vicinity of the lower side wall portion 210f of the mixing chamber 210 (below the mixed air flow F3).

Therefore, the first and second warm air flows Fd31 and Fd32 flowing below the mixed air flow F3 can easily flow to the foot opening 240. The mixed air flow F3 flowing through the substantially center and the upper portion of the mixing chamber 210 can easily flow to the ventilation opening 230.

The third warm air flow Fd33 flows while circling from the second side wall 210d side to the upper side wall portion 210e of the mixing chamber 210 at the portion biased to the upstream end 210a of the mixing chamber 210, is mixed with the mixed air flow F3, and reaches the ventilation opening 230.

Therefore, at the portion biased to the upstream end 210a of the mixing chamber 210, the air-conditioning air blown out from the ventilation opening 230 is a mixture of the third warm air flow Fd33 and the mixed air flow F3. The air-conditioning air blown out from the foot opening 240 is a mixture of the mixed air flow F3, the first warm air flow Fd31, and the second warm air flow Fd32. Consequently, as illustrated in Fig. 5C, the air-conditioning air blown out from the ventilation opening 230 has a temperature of 10 to 20°C, and the air-conditioning air blown out from the foot opening 240 has a temperature of 20 to 30°C at the portion biased to the upstream end 210a of the mixing chamber 210.

The vehicle air-conditioning apparatus 1A having the rectifying portion 30 is capable of mixing the cold air flow and the warm air flow further uniformly in the substantially entire area of the mixing chamber 210 as described above. Therefore, even at the portion biased to the downstream end 210b of the mixing chamber 210, as illustrated in Fig. 5D, the air-conditioning air blown out from the ventilation opening 230 is a mixture of the third warm air flow Fd33 and the mixed air flow F3 having a temperature of 10 to 20°C. The air-conditioning air blown out from the foot opening 240 is a mixture of the mixed air flow F3, the first warm air flow Fd31, and the second warm air flow Fd32 having a temperature of 30 to 45°C.

In other words, in the case where the vehicle air-conditioning apparatus 1A is provided with the rectifying portion 30, the air-conditioning air blown out from the foot outlet grill is increased in temperature higher than the air-conditioning air blown out from the ventilation outlet grill. Therefore, the cool-head warm-foot is achieved, and, in addition, the air-conditioning air blown out from the ventilation outlet grill and the foot outlet grill has a small temperature difference between the upstream end 210a side and the downstream end 210b side of the mixing chamber 210.

Here, the temperature of the air-conditioning air blown out from the ventilation opening 230 and the foot opening 240 is slightly higher on the downstream end 210b side than the upstream end 210a side of the mixing chamber 210. This is because the incoming cold air flow Fc1 flowing into the mixing chamber 210 circles while being mixed with the third warm air flow Fd33 or the like and hence is allowed to pass easily through the ventilation opening 230 on the upstream end 210a side of the mixing chamber 210.

Therefore, by setting the flowing direction or the like of the mixed air flow F3 as needed by tuning with the shape of the rectifying portion 30 and reducing the amount of flow or the speed of flow of the third warm air flow Fd33 which provides the mixed air flow F3 with a circling force, the difference in temperature of the air-conditioning air between the upstream end 210a side and the downstream end 210b side of the mixing chamber 210 may be reduced (the air-conditioning on the driver's seat side and the air-conditioning on the front passenger seat side may be substantially equalized).

Even when the vehicle air-conditioning apparatus 1A having the rectifying portion 30 is operated in a defrosting and foot mode, that is, even when the ventilation opening 230 is closed by the ventilation air distributing door 231, and the defrost air distributing door 221 and the foot air distributing door 241 are opened as needed to allow the air-conditioning air to flow through the defrost opening 220 and the foot opening 240 by a desired amount, the incoming cold air flow Fc1 and the incoming warm air flow Fd1 are rectified in the same manner as during the bi-level mode operation and flow into the mixing chamber 210. Therefore, the air-conditioning air blown out from the defrost opening 220 is a mixture of the third warm air flow Fd33 and the mixed air flow F3 in the same manner as during the bi-level mode operation.

However, the third warm air flow Fd33 flowing while circling from the second side wall 210d side to the upper side wall portion 210e side of the mixing chamber 210 reaches a portion in the vicinity of the defrost opening 220 before reaching the ventilation opening 230. Therefore, when comparing the air-conditioning air blown out from the defrost opening 220 during the defrosting and foot mode operation and the air-conditioning air blown out from the ventilation opening 230 during the bi-level mode operation, the blend ratio of the mixed air flow F3 (including the incoming cold air flow Fc1) in the former is smaller than that of the latter.

In other words, the air-conditioning air blow out from the defrost opening 220 during the defrosting and foot mode operation is higher in temperature than the air-conditioning air blown out from the ventilation opening 230 during the bi-level mode operation. Therefore, the temperature difference between the air-conditioning air blown out from the foot outlet grill and the air-conditioning air blown out from the ventilation outlet grill in the defrosting and foot mode operation can be reduced in comparison with in the bi-level mode (dew formation on the front glass may be removed desirably with warm air).

Although the vehicle air-conditioning apparatus according to the embodiment of the invention has been described thus far, the invention may be modified as needed within the scope of the appended claims. For example, the width of the rectifying portion may be the substantially same as the width of the mixing chamber. In the bi-level mode, the temperature of the air-conditioning air blown out from the foot outlet grill may be increased further reliably to a level higher than a temperature of the air-conditioning air blown out from the ventilation outlet grill. The rectifying surface provided on the rectifying portion may have three or more rectifying surfaces having different lengths, may have a curved surface, or may be continuously or discontinuously changed in length in the width direction of the rectifying surface.

The rectifying portion of the vehicle air-conditioning apparatus of the invention may rectify the cold air flowing from the cold air opening into the mixing chamber toward one or both of the first opening and the second opening. Accordingly, the vehicle air-conditioning apparatus is capable of increasing the amount of flow of the warm air flowing through the third opening and, in addition, reducing the amount of flow of the cold air flowing through the third opening, so that the cool-head warm-foot air-conditioning may be realized further comfortably by increasing the temperature of the air-conditioning air flowing through the third opening to a level higher than the temperature of the air-conditioning air flowing through other openings.

### Industrial applicability

The vehicle air-conditioning apparatus of the invention may be manufactured industrially, and may be an object for commercial dealings. Therefore, the invention has an economical value and is industrially applicable.

### Reference Signs List

1A vehicle air-conditioning apparatus
10 temperature adjusting portion
20 air distributing portion
30 rectifying portion
31 rectifying surface
40 case
110 cold air flow channel
111 cold air opening
112 cooling device (evaporator)
120 warm air flow channel
210a upstream end of mixing chamber
121 warm air opening
122 heating device (heater core)
130 mix door
210 mixing chamber
220 first opening (defrost opening)
221 air distributing door (defrost air distributing door)
230 second opening (ventilation opening)
231 air distributing door (ventilation air distributing door)
240 third opening (foot opening)
241 air distributing door (foot air distributing door)

## Claims

1. A vehicle air-conditioning apparatus (1A) comprising:
a cold air flow channel (110) in which cold air flows;
a warm air flow channel (120) in which warm air flows;
a mixing chamber (210) configured to mix the cold air and the warm air to create air-conditioning air;
a cold air opening (111) that opens between the cold air flow channel and the mixing chamber;
a warm air opening (121) that opens between the warm air flow channel and the mixing chamber;
a first opening (220) and a second opening (230) that open the mixing chamber;
a third opening (240) that opens the mixing chamber configured to blow out the air-conditioning air from a position lower than the first opening and the second opening;
a case (40) including at least the cold air flow channel (110), the warm air flow channel (120), the mixing chamber (210), the cold air opening (111), the warm air opening (121), the first opening (220), the second opening (230), and the third opening (240) ;
a mix door (130) configured to adjust a ratio between an amount of the cold air flowing from the cold air opening into the mixing chamber and an amount of the warm air flowing from the warm air opening into the mixing chamber;
air distribution doors (221, 231, 241) disposed in the mixing chamber or on the downstream thereof and configured to regulate a flow of the air-conditioning air from the mixing chamber to the first, second, and third openings; and
a rectifying portion (30) disposed in the vicinity of an upstream end of the mixing chamber and configured to rectify the warm air flowing from the warm air opening into the mixing chamber toward the third opening, **characterized in that**:
the mixing chamber (210) has a longitudinal direction in the flowing direction of the air-conditioning air, and a width direction in a direction intersecting the flowing direction of the air-conditioning air, and
a rectifying surface (31) of the rectifying portion has a width over an entire area of the mixing chamber (210) in the width direction or over part of the area of the mixing chamber in the width direction,
wherein the rectifying surface (31) of the rectifying portion has different length depending on portions in the width direction.

2. The vehicle air-conditioning apparatus (1A) according to Claim 1, wherein the rectifying portion (30) rectifies the cold air flowing from the cold air opening (111) to the mixing chamber (210) to one or both of the first opening (220) and the second opening (230).

3. The vehicle air-conditioning apparatus (1A) according to Claim 1 or 2, wherein a flowing direction of the cold air flowing from a position in the vicinity of a downstream end of the cold air flow channel (110) toward the cold air opening (111) and a flowing direction of the warm air flowing from a position in the vicinity of a downstream end of the warm air flow channel (120) toward the warm air opening (121) intersect each other.

4. The vehicle air-conditioning apparatus (1A) according to any one of Claims 1 to 3, wherein a flowing direction of the air-conditioning air in the mixing chamber (210) is the substantially same direction as one of a flowing direction of the cold air flowing from the cold air flow channel (110) through the cold air opening (111) toward the upstream end of the mixing chamber, and a flowing direction of the warm air flowing from the warm air flow channel (120) through the warm air opening (121) toward the position in the vicinity of the upstream end of the mixing chamber.

5. The vehicle air-conditioning apparatus (1A) according to any one of Claims 1 to 4, wherein
the warm air opening (121) is disposed below the mixing chamber in the vicinity of the upstream end of the mixing chamber, and the warm air flow channel (120) and the mixing chamber(210) communicate with each other, or
the cold air opening (111) is disposed above the mixing chamber in the vicinity of the upstream end of the mixing chamber, and the cold air flow channel (110) and the mixing chamber (210) communicate with each other.

6. The vehicle air-conditioning apparatus (1A) according to any one of Claims 1 to 5, wherein
the first opening (220), the second opening (230), and the third opening (240) open the mixing chamber so as to intersect respectively with the flowing direction of the air-conditioning air in the mixing chamber (210).

7. The vehicle air-conditioning apparatus (1A) according to Claim 1 to 6, wherein the rectifying surface (31) of the rectifying portion has one or both shapes of a flat plane and a curved plane.

8. The vehicle air-conditioning apparatus (1A) according to any one of Claims 1 to 7, further comprising a cooling device (112) disposed in the cold air flow channel (110), and a heating device (122) disposed in the warm air flow channel (120) .

9. The vehicle air-conditioning apparatus (1A) according to any one of Claims 1 to 8, wherein the first opening (220) may be a defrost opening, and the second opening (230) may be a ventilation opening, and the third opening (240) may be a foot opening.

## Patentansprüche

1. Fahrzeugklimaanlage (1A), Folgendes umfassend:
einen Kaltluftströmungskanal (110), in dem kalte Luft strömt;
einen Warmluftströmungskanal (120), in dem warme Luft strömt;
eine Mischkammer (210), die dazu ausgelegt ist, die kalte Luft und die warme Luft zu vermischen, um Klimaanlagenluft zu erzeugen;
eine Kaltluftöffnung (111), die sich zwischen dem Kaltluftströmungskanal und der Mischkammer öffnet;
eine Warmluftöffnung (121), die sich zwischen dem Warmluftströmungskanal und der Mischkammer öffnet;
eine erste Öffnung (220) und eine zweite Öffnung (230), die die Mischkammer öffnen;
eine dritte Öffnung (240), die die Mischkammer öffnet und dazu ausgelegt ist, die Klimaanlagenluft von einer Position auszublasen, die niedriger als die erste Öffnung und die zweite Öffnung ist;
ein Gehäuse (40), das mindestens den Kaltluftströmungskanal (110), den Warmluftströmungskanal (120), die Mischkammer (210), die Kaltluftöffnung (111), die Warmluftöffnung (121), die erste Öffnung (220), die zweite Öffnung (230) und die dritte Öffnung (240) enthält; eine Mischklappe (130), die dazu ausgelegt ist, das Verhältnis zwischen einer Menge der Kaltluft, die von der Kaltluftöffnung in die Mischkammer strömt, und einer Menge der Warmluft, die von der Warmluftöffnung in die Mischkammer strömt, einzustellen;
Luftverteilungsklappen (221, 231, 241), die in der Mischkammer oder danach angeordnet und dazu ausgelegt sind, eine Strömung der Klimaanlagenluft von der Mischkammer zur ersten, zweiten und dritten Öffnung zu regeln; und
einen Ausrichtungsabschnitt (30), der in der Nähe eines vorgelagerten Endes der Mischkammer angeordnet und dazu ausgelegt ist, die warme Luft, die von der Warmluftöffnung in die Mischkammer strömt, in Richtung der dritten Öffnung auszurichten, **dadurch gekennzeichnet, dass**:
die Mischkammer (210) eine Längsrichtung in Strömungsrichtung der Klimaanlagenluft und eine Breitenrichtung in eine Richtung, die die Strömungsrichtung der Klimaanlagenluft schneidet, aufweist, und
eine Ausrichtungsfläche (31) des Ausrichtungsabschnitts eine Breite über einen gesamten Bereich der Mischkammer (210) in Breitenrichtung oder über einen Teil des Bereichs der Mischkammer in Breitenrichtung aufweist,
wobei die Ausrichtungsfläche (31) des Ausrichtungsabschnitts in Abhängigkeit der Abschnitte in Breitenrichtung unterschiedliche Längen aufweist.

2. Fahrzeugklimaanlage (1A) nach Anspruch 1, wobei der Ausrichtungsabschnitt (30) die kalte Luft, die von der Kaltluftöffnung (111) zur Mischkammer (210) strömt, zur ersten Öffnung (220) und/oder zur zweiten Öffnung (230) ausrichtet.

3. Fahrzeugklimaanlage (1A) nach Anspruch 1 oder 2, wobei eine Strömungsrichtung der Kaltluft, die von einer Position in der Nähe eines nachgelagerten Endes des Kaltluftströmungskanals (110) in Richtung der Kaltluftöffnung (111) strömt, und eine Strömungsrichtung der Warmluft, die von einer Position in der Nähe eines nachgelagerten Endes des Warmluftströmungskanals (120) in Richtung der Warmluftöffnung (121) strömt, einander schneiden.

4. Fahrzeugklimaanlage (1A) nach einem der Ansprüche 1 bis 3, wobei eine Strömungsrichtung der Klimaanlagenluft in der Mischkammer (210) im Wesentlichen dieselbe Richtung wie die einer Strömungsrichtung der Kaltluft, die vom Kaltluftströmungskanal (110) durch die Kaltluftöffnung (111) in Richtung des vorgelagerten Endes der Mischkammer strömt, oder einer Strömungsrichtung der Warmluft, die vom Warmluftströmungskanal (120) durch die Warmluftöffnung (121) in Richtung der Position in der Nähe des vorgelagerten Endes der Mischkammer strömt, ist.

5. Fahrzeugklimaanlage (1A) nach einem der Ansprüche 1 bis 4, wobei
die Warmluftöffnung (121) unter der Mischkammer in der Nähe des vorgelagerten Endes der Mischkammer angeordnet ist und der Warmluftströmungskanal (120) und die Mischkammer (210) miteinander verbunden sind, oder
die Kaltluftöffnung (111) über der Mischkammer in der Nähe des vorgelagerten Endes der Mischkammer angeordnet ist und der Kaltluftströmungskanal (110) und die Mischkammer (210) miteinander verbunden sind.

6. Fahrzeugklimaanlage (1A) nach einem der Ansprüche 1 bis 5, wobei
die erste Öffnung (220), die zweite Öffnung (230) und die dritte Öffnung (240) die Mischkammer öffnen, um jeweils die Strömungsrichtung der Klimaanlagenluft in der Mischkammer (210) zu schneiden.

7. Fahrzeugklimaanlage (1A) nach Anspruch 1 bis 6, wobei die Ausrichtungsfläche (31) des Ausrichtungsabschnitts die Formen einer planen Ebene und/oder einer gekrümmten Ebene aufweist.

8. Fahrzeugklimaanlage (1A) nach einem der Ansprüche 1 bis 7, ferner eine Kühlvorrichtung (112), die im Kaltluftströmungskanal (110) angeordnet ist, und eine Heizvorrichtung (122), die im Warmluftströmungskanal (120) angeordnet ist, umfassend.

9. Fahrzeugklimaanlage (1A) nach einem der Ansprüche 1 bis 8, wobei die erste Öffnung (220) eine Abtauöffnung sein kann und die zweite Öffnung (230) eine Lüftungsöffnung sein kann und die dritte Öffnung (240) eine Fußöffnung sein kann.

## Revendications

1. Appareil de climatisation (1A) de véhicule comprenant :
un canal d'écoulement d'air froid (110) dans lequel s'écoule de l'air froid ;
un canal d'écoulement d'air chaud (120) dans lequel circule l'air chaud ;
une chambre de mélange (210) conçue pour mélanger l'air froid et l'air chaud pour créer de l'air de climatisation ;
une ouverture d'air froid (111) qui s'ouvre entre le canal d'écoulement d'air froid et la chambre de mélange ;
une ouverture d'air chaud (121) qui s'ouvre entre le canal d'écoulement d'air chaud et la chambre de mélange ;
une première ouverture (220) et une deuxième ouverture (230) qui ouvrent la chambre de mélange ;
une troisième ouverture (240) qui ouvre la chambre de mélange conçue pour souffler l'air de climatisation à partir d'une position plus basse que la première ouverture et la deuxième ouverture ;
un boîtier (40) comprenant au moins le canal d'écoulement d'air froid (110), le canal d'écoulement d'air chaud (120), la chambre de mélange (210), l'ouverture d'air froid (111), l'ouverture d'air chaud (121), la première ouverture (220), la deuxième ouverture (230) et la troisième ouverture (240) ;
une porte de mélange (130) conçue pour ajuster un rapport entre une quantité d'air froid s'écoulant de l'ouverture d'air froid dans la chambre de mélange et une quantité d'air chaud s'écoulant de l'ouverture d'air chaud dans la chambre de mélange ;
des portes de distribution d'air (221, 231, 241) disposées dans la chambre de mélange ou en aval de celle-ci et conçues pour réguler un écoulement d'air de climatisation de la chambre de mélange vers les première, deuxième et troisième ouvertures ; et
une partie de rectification (30) disposée au voisinage d'une extrémité amont de la chambre de mélange et conçue pour rectifier l'air chaud s'écoulant de l'ouverture d'air chaud dans la chambre de mélange vers la troisième ouverture, **caractérisé en ce que** :
la chambre de mélange (210) a une direction longitudinale dans la direction d'écoulement de l'air de climatisation, et une direction de largeur dans une direction croisant la direction d'écoulement de l'air de climatisation, et
une surface de rectification (31) de la partie de rectification a une largeur sur toute une zone de la chambre de mélange (210) dans la direction de la largeur ou sur une partie de la zone de la chambre de mélange dans la direction de la largeur,
la surface de rectification (31) de la partie de rectification ayant une longueur différente selon les parties dans la direction de la largeur.

2. Appareil de climatisation (1A) de véhicule selon la revendication 1, la partie de rectification (30) rectifiant l'air froid s'écoulant de l'ouverture d'air froid (111) vers la chambre de mélange (210) vers la première ouverture (220) et/ou la deuxième ouverture (230) .

3. Appareil de climatisation (1A) de véhicule selon la revendication 1 ou 2, une direction d'écoulement de l'air froid s'écoulant depuis une position au voisinage d'une extrémité aval du canal d'écoulement d'air froid (110) vers l'ouverture d'air froid (111) et une direction d'écoulement de l'air chaud s'écoulant depuis une position au voisinage d'une extrémité aval du canal d'écoulement d'air chaud (120) vers l'ouverture d'air chaud (121) se croisant.

4. Appareil de climatisation (1A) de véhicule selon l'une quelconque des revendications 1 à 3, une direction d'écoulement de l'air de climatisation dans la chambre de mélange (210) étant sensiblement la même direction que l'une d'une direction d'écoulement de l'air froid s'écoulant depuis le canal d'écoulement d'air froid (110) à travers l'ouverture d'air froid (111) vers l'extrémité amont de la chambre de mélange, et d'une direction d'écoulement de l'air chaud s'écoulant depuis le canal d'écoulement d'air chaud (120) à travers l'ouverture d'air chaud (121) vers la position au voisinage de l'extrémité amont de la chambre de mélange.

5. Appareil de climatisation (1A) de véhicule selon l'une quelconque des revendications 1 à 4,
l'ouverture d'air chaud (121) étant disposée en dessous de la chambre de mélange, à proximité de l'extrémité amont de la chambre de mélange, et le canal d'écoulement d'air chaud (120) et la chambre de mélange (210) communiquant entre eux, ou
l'ouverture d'air froid (111) étant disposée au-dessus de la chambre de mélange, à proximité de l'extrémité amont de la chambre de mélange, et le canal d'écoulement d'air froid (110) et la chambre de mélange (210) communiquant entre eux.

6. Appareil de climatisation (1A) de véhicule selon l'une quelconque des revendications 1 à 5,
la première ouverture (220), la deuxième ouverture (230) et la troisième ouverture (240) ouvrant la chambre de mélange de sorte à se croiser respectivement avec la direction d'écoulement de l'air de climatisation dans la chambre de mélange (210).

7. Appareil de climatisation (1A) de véhicule selon les revendications 1 à 6, la surface de rectification (31) de la partie de rectification ayant la forme d'un plan plat et/ou d'un plan courbe.

8. Appareil de climatisation (1A) de véhicule selon l'une quelconque des revendications 1 à 7, comprenant en outre un dispositif de refroidissement (112) disposé dans le canal d'écoulement d'air froid (110), et un dispositif de chauffage (122) disposé dans le canal d'écoulement d'air chaud (120).

9. Appareil de climatisation (1A) de véhicule selon l'une quelconque des revendications 1 à 8, la première ouverture (220) pouvant être une ouverture de dégivrage, et la deuxième ouverture (230) pouvant être une ouverture de ventilation, et la troisième ouverture (240) pouvant être une ouverture pour les pieds.
